Europäisches Patentamt

European Patent Office

Office européen des brevets

(11) Publication number: **0 257 495**
**A2**

## (12) EUROPEAN PATENT APPLICATION

(21) Application number: 87111842.8

(22) Date of filing: 15.08.87

(51) Int. Cl.⁴: **C09D 5/44** , C08G 59/02 ,
C08G 59/56 , C08G 18/58

(30) Priority: 29.08.86 US 901617

(43) Date of publication of application:
02.03.88 Bulletin 88/09

(84) Designated Contracting States:
BE DE FR GB IT NL

(71) Applicant: DeSoto, Inc.
1700 South Mt. Prospect Road
Des Plaines Illinois 60017(US)

(72) Inventor: Kazys, Sekmakas
4375 Poinsettia Drive St. Petersburg Beach
Florida 33 706(US)

(74) Representative: Reitzner, Bruno, Dr.
Patentanwälte Dipl.-Ing. R. Splanemann Dr.
B. Reitzner Tal 13
D-8000 München 2(DE)

(54) Water-dispersible cationic polyepoxide-amine adducts.

(57) A method of electrodepositing a hard impact resistant and corrosion resistant film on the cathode of a unidirectional electrical system is disclosed in which a unidirectional electrical current is passed through an aqueous coating composition having a pH in the range of pH 4 to pH 6 comprising water having dispersed therein an hydroxy functional cationic resin comprising an adduct of a resinous polyepoxide having a number average molecular weight in the range of about 600 to about 6000 and an hydroxy value of from about 0.2 to about 0.4, this resinous polyepoxide having its molecular weight optionally increased by reaction with a stoichiometric deficiency of organic polyisocyanate, with a mixture of monosecondary amines in an amount to consume substantially all of the epoxy functionality of said polyepoxide in the formation of tertiary amines by reaction of the monosecondary amines with the oxirane groups of the polyepoxide. This mixture of monosecondary amines comprises a mixture of diethanol amine and dibutyl amine in molar proportions within the range of 1:2 to 2:1. The cationic resin is dispersed in the water by means of neutralization with a volatile organic acid to an extent of at least 80%, and the electrical current passes through the cathode to deposit a resin film thereon, which is then usually rinsed and baked to cure the same. The mixture of monosecondary amines provides good bath stability combined with electrical deposition characteristics in the cathodic electrodeposition process.

EP 0 257 495 A2

## WATER-DISPERSIBLE CATIONIC POLYEPOXIDE-AMINE ADDUCTS

### Technical Field

This invention relates to water-dispersible cationic resins which are particularly useful for aqueous cationic electrodeposition, and to the aqueous baths which are used in such electrodeposition.

### Background Art

Polyepoxide-amine adducts have long held the potential of providing interesting water-dispersible resins for aqueous cationic electrodeposition, but industrially interesting results have not be attainable. Many attempts have been made to rectify this difficult situation.

In my prior U. S. Pat. No. 3,891,527 issued June 24, 1975, an effort was made to provide water-dispersible cationic resins for cationic electrocoating, I reacted an hydroxy-functional resinous polyepoxide with a small proportion of an organic diisocyanate as well as with a monosecondary amine in an amount to consume substantially all of the epoxy functionality of the polyepoxide. The resulting amine-functional polyurethane was then rendered cationic with an acid and dispersed in water to provide an aqueous dispersion of hydroxy-functional resin. A curing agent for this hydroxy-functional resin was also dispersed in the water, preferably an aminoplast curing agent, and the hydroxy-functional resin and the curing agent were codeposited at the cathode of a unidirectional electrical system and cured by baking.

Reasonably good results were obtained following the teachings of said patent 3,891,527, but these results were never good enough to satisfy commercial requirements, primarily because the electrical deposition characteristics were not satisfactory. More particularly, when the aqueous electrocoating baths were formulated to be adequately stable, the rinse sensitivity, the deposition voltages and the throwing power were inadequate.

More particularly, in the electrocoating process, the piece to be coated is immersed in the aqueous electrocoating bath as cathode and a unidirectional electrical current is used to cause the resins dispersed in the bath to deposit on the cathode. The wet-coated cathode must then be removed from the bath and washed with water to remove extraneous bath liquor. It was found that the rinsing operation tended to disrupt the wet coating, and this is manifestly unsatisfactory.

Also, when the electrical current is turned on, it is desired that the amperage drop off rapidly with time, which is referred to as current shutdown, in order to rapidly deposit a compact film. It was found that the shutdown time was too slow. Correspondingly, and because the deposited film was not sufficiently compact, it was not possible to employ the higher deposition voltages which make possible the formation of compact films of greater thickness.

The throwing power is also significant. Throwing power is the capacity of the system to force the desired coating to be deposited deep within concavities of the piece to be coated. It was not previously possible to provide adequately stable baths which possessed sufficient capacity to deposit deep within these concavities.

Accordingly, the cationic electrocoating systems of said patent 3,891,527, while showing promise in several directions, were never accepted in commerce.

I have also had experience with cationic electrocoat systems in which Mannich bases formed with monosecondary amines are dispersed in water with the aid of appropriate acids. However, these Mannich bases are very different from the polyepoxide adducts which are used herein, and are indeed unique materials in cationic electrocoating systems. More particularly, the usual amine-functional resin which is dispersed in water with the aid of an acid requires extensive neutralization with the acid (at least 80% neutralization) in order to form a stable aqueous dispersion, and these dispersions have an acid pH, usually with a pH in the range of pH 4 to pH 6. In contrast, the Mannich bases are neutralized with acid to a much smaller extent (50% to 60%), and they form stable electrocoat baths which have a pH which is neutral to basic, e.g., pH 7 to pH 9. As a matter of interest, the balance of amines found to be useful in those Mannich base systems have been found to be uniquely valuable here, but this is a surprise because of the enormous difference in the character of the solubilization which is conferred in these two different situations.

2

## Disclosure of Invention

In accordance with this invention, I have found that the monoamines which are used to consume the epoxy functionality in the polyepoxide must be carefully selected and balanced to allow one to obtain a stable aqueous bath which can be electrodeposited at an adequate voltage for proper film build, which will experience a rapid shutdown, and which will possess adequate throwing power.

In my said prior patent, I found that the hydroxy amines, such as diethanol amine, dimethanol amine and dipropanol amine were preferred because they provided the best water dispersibility. While this is true, I now find that the best water dispersibility does not provide the best electrocoating baths. On the other hand, I indicated in that patent that one could also use other amines, such as diethyl amine or dipropyl amine, albeit the hydroxy amines were superior. This is true from the standpoint of water dispersibility, since when these dialkyl amines are used alone as the monosecondary amine, the aqueous baths are not adequately stable. In this regard it will be understood that an aqueous electrocoating bath is usually very large and must be maintained in circulation for many months without separation or settling. The dialkyl amines do not provide adquate long term stability in the aqueous electrocoating bath mediumś.

I now find that when diethanol amine, is combined with a dibutyl amine in approximately equimolar proportions, the balance of tertiary amines formed by reaction of these two selected amines with the oxirane groups of the polyepoxide provides a previously unattainable balance of properties in cationic electrocoating systems which have a pH of from 4 to 6 and which employ polyepoxides of sufficiently high molecular weight (which may have been extended to increase their molecular weight by polyurethane formation as in my said prior patent.

More particularly, and when the molar proportions of the dialkanol amine and the dibutyl amine are within the range of 1:2 to 2:1, the aqueous electrocoating baths possess long term stability at an acid pH which is not so strongly acidic as to prevent use in commercial electrocoating facilities. At the same time, the electrodeposited films are more compact, higher voltages can be used to form thicker films, and the electrodeposited films are strong enough to adequately resist water washing when they are removed from the baths. The throwing power and the shutdown time are also improved.

These improvements in performance have upgraded the cationic electrocoating systems of my said prior patent so that the previously obtained cured coatings of excellent properties are now obtained using stable systems which also possess good electrocoating characteristics, the details of which have already been described.

Accordingly, and in this invention, I provide a method of electrodepositing a hard impact resistant and corrosion resistant film on the cathode of a unidirectional electrical system which comprises, passing a unidirectional electrical current through an aqueous coating composition having a pH in the range of pH 4 to pH 6 comprising water having dispersed therein an hydroxy functional cationic resin comprising an adduct of a resinous polyepoxide having a number average molecular weight in the range of about 600 to about 6000 and an hydroxy value of from about 0.2 to about 0.4, and a mixture of monosecondary amines in an amount to consume substantially all of the epoxy functionality of said polyepoxide in the formation of tertiary amines by reaction of the monosecondary amines with the oxirane groups of the polyepoxide. When the polyepoxide has a molecular weight of less than about 1,500, it is preferred to increase the molecular weight by adduction with a stoichiometric deficiency of organic polyisocyanate, as in my prior patent. However, and while this is preferred herein, it is not essential. When the polyepoxide has a molecular weight of more than about 1,500, it is preferred to employ it without reaction with polyisocyanate. When the polyepoxide is of intermediate molecular weight, the decision as to whether it is better to increase that molecular weight will depend on the particular properties and use of coating compositions, and can be arrived at by simple routine tests.

This mixture of monosecondary amines comprises a mixture of diethanol amine and dibutyl amine in molar proportions within the range of 1:2 to 2:1. The resulting cationic resin is dispersed in the water by means of a volatile organic acid which is used to neutralize at least 80% of the amine groups to provide a bath pH of from 4 to 6. Then the electrical current passes through the cathode to deposit a resin film thereon, and this film is then baked, usually after rinsing to remove bath material clinging to the deposited coating. The diethanol amine and the dibutyl amine are preferably present in approximately equal molar proportions.

The polyepoxides which are used herein are the same as those described in my said prior patent, number average molecular weights of from 1,200 to 2,000 being presently considered best, and the curing agents are also the same, as will be illustrated in the examples. Similarly, the resin solids content of the aqueous electrocoating baths is in the range of 3 to 25% and the bath pH is in the range of 4 to 6. The resin solution which is dispersed in the water to form the bath will normally include from 10-50% of water miscible organic solvent, based on resin solids, and the tertiary amine resins are dispersed in the aqueous medium with volatile acids like acetic acid and dimethylol propionic acid which are used in an amount of neutralize at least 80% of the amine groups which are present, preferably about 90%.

The preferred curing agents are aminoplast resins which are normally used in an amount of from 5-50% of total resin solids. Much of the foregoing is more fully discussed in my prior patent 3,891,527, the disclosure of which is hereby incorporated by reference. Also, the baths are preferably pigmented to cause the deposit of pigmented coatings, as will be illustrated in the examples.

The invention is illustrated in the examples which follow, it being understood that throughout this application, all proportions are by weight, unless otherwise stated.

Example 1

1500 grams of diglycidyl ether of bisphenol A having a number average molecular weight of about 1,000 (Epon 1001 from Shell Chemical Company is used) is dissolved in 500 grams of methyl ethyl ketone at 70°C. using a nitrogen sparge and agitation. 60 grams of toluene diisocyanate (commercial mixture of 2,4 and 2,6 isotomers) is added over 30 minutes while maintaining 70°C. and the 70°C. temperature is maintained for 30 minutes and then raised to 90°C. and held for 1 hour to consume all the isocyanate functionality in the production of polyurethane.

The epoxy-functional polyurethane product is then cooled to 35°C. and a mixture of 150 grams of diethanol amine and 180 grams of di-n-butyl amine is slowly added over 10 minutes. The temperature is then maintained at 35°C. for 1 hour and then raised to 70°C. which is maintained for 1 1/2 hours. The product is a tertiary amine-containing, hydroxy-functional, polyurethane solution which is cooled to room temperature and then 500 grams of 2-butoxy ethanol are added to provide a 65.9% solution having a Gardner-Holdt viscosity of $Z_3+$, a Gardner color of 2-3 and an acid value of 0.

Example 2

Example 1 is repeated using Epon 1004 (Shell Chemical Company) in place of the Epon 1001 used in Example 1. The same procedure is used to provide a corresponding solution product from the following components.

| Component | Weight Percent |
|---|---|
| Epon 1004 | 87.8 |
| Toluene Diisocyanate | 1.64 |
| Diethanolamine | 4.82 |
| Di-n-butyl amine | 5.74 |

The product was provided in 65.4% solids solution in an equiweight mixture of methyl ethyl ketone and 2-butoxy ethanol. The solution had about the same color and acid value as in Example 1 and a Gardner-Holdt viscosity of $Z_7$.

Example 3

Example 2 is repeated except the toluene diisocyanate is omitted, the Epon 1004 being used without modification, except by adduction with the two named amines. The product was provided in about 67% solids solution in the same solvent mixture used in Example 2.

## Example 4

There is first formed a pigment dispersion by dispersing pigments in an acrylic copolymer having good pigment wetting characteristics. This can be done by adding 200 grams of titanium dioxide, rutile, 6 grams of fumed silica and 3 grams carbon black to a mixture of 140 grams of a 58% solution of an acrylic copolymer (see note 1) in an equiweight mixture of 2-butoxy ethanol, methyl ethyl ketone and isopropanol and 40 grams of added 2-butoxy ethanol. This mixture is then ground in a sand mill to a Hegman grind rating of 6.5 -7.0.

403 grams of the above described pigment dispersion are then mixed with 518 grams of the product of Example 2, 180 grams of hexamethoxymethyl melamine (American Cyanamid product XM 1130 is used), and 51 grams of dimethylol propionic acid (representing 90% neutralization). The above is mixed until uniform and then sufficient deionized water is added using ordinary agitation to form 2 gallons of an electrocoating bath.

The above-described bath contains about 10-11% · nonvolatile solids (including the pigment) and it is applied to iron phosphated cold rolled steel panels having dimensions of 4 inches by 12 inches which are immersed in the bath (having a temperature of 90°F. and connected to a unidirectional electrical circuit as cathode. A voltage of 125 volts is applied for 90 seconds to electrodeposit a film having a thickness in the range of 0.6 to 0.7 mil (dry).

Note 1: The acrylic copolymer is a solution copolymer of 35% styrene, 31% n-butyl acrylate, 17% 2-hydroxyethyl acrylate and 17% 3-dimethylaminopropyl methacrylamide. It is used because it wets the pigments well, it is hydroxy-functional to participate in the ultimate cure, and because it is amine-functional to be dispersible in the acidic electrodeposition bath and to codeposit at the cathode.

The panels containing the electrodeposited film was then removed from the bath, rinsed with deionized water and then baked for 20 minutes at 425°F. The cured coatings exhibited excellent salt spray and corrosion resistance, they had a pencil hardness in the range of 3H to 4H, they passed direct and reverse impact tests at 80 inch pounds, and the methyl ethyl ketone resistance was in excess of 100 double rubs with a ketone-saturated cloth.

The electrocoating operation was excellent in that rinse sensitivity was good. In the past, and using diethanol amine along as the monosecondary amine reactant, poor wet adhesion was experienced as evidenced by the fact that water rinsing would undercut the coating and remove large portions of it. Water washing in this example was not detrimental. Also, the electrocoat operation provided a fast shut down. The initial amperage at the start of operation was 15 amps. This dropped to 2 to 3 amps within 5 seconds which is viewed as a fast shut down. This fast shut down also evidences good throwing power, for resin systems which shut down rapidly normally possess good throwing power. Also, the deposited films were denser and more flow resistant. Using diethanol amine alone, the coatings tended to flow away from the edges of the panels, especially while the coatings were being baked. The denser films deposited here resist flowing better and provide superior edge coverage.

Repeating the above example using the Example 3 solution in place of the Example 2 solution produced corresponding results.

## Claims

1. A method of electrodepositing a hard impact resistant and corrosion resistant film on the cathode of a unidirectional electrical system comprising, passing a unidirectional electrical current through an aqueous coating composition having a pH in the range of pH 4 to pH 6 comprising water having dispersed therein an hydroxy functional cationic resin comprising an adduct of a resinous polyepoxide having a number average molecular weight in the range of about 600 to about 6000 and an hydroxy value of from about 0.2 to about 0.4, said resinous polyepoxide having its molecular weight optionally increased by reaction with a stoichiometric deficiency of organic polyisocyanate, with a mixture of monosecondary amines in an amount to consume substantially all of the epoxy functionality of said polyepoxide in the formation of tertiary amines by reaction of the monosecondary amines with the oxirane groups of the polyepoxide, said mixture of monosecondary amines comprising a mixture of diethanol amine and dibutyl amine in molar proportions within the range of 1:2 to 2:1, said cationic resin being dispersed in the water by neutralization with a volatile organic acid to an extent of at least 80%, and then through said cathode to deposit a resin film thereon, and then baking said film to cure the same.

2. A method as recited in claim 1 in which said acid is a volatile organic acid and the resin film which is deposited is rinsed prior to baking.

3. A method as recited in claim 1 in which said diethanol amine and said dibutyl amine are present in approximately equal molar proportions.

4. A method as recited in claim 1 in which said resinous polyepoxide is a diglycidyl ether of a bisphenol having a number average molecular weight in the range of from about 800 to about 4,000 and a 1.2-epoxy equivalency of from 1.4 to 2.0.

5. A method as recited in claim 1 in which said resinous polyepoxide has a number average molecular weight in excess of 1,500 and is not reacted with polyisocyanate.

6. A method as recited in claim 1 in which said organic polyisocyanate is a diisocyanate used in an amount to provide a ratio of hydroxy groups in said polyepoxide to isocyanate groups of from 3:2 to 50:1.

7. A method as recited in claim 6 in which said organic polyisocyanate is a diisocyanate used in an amount to provide a ratio of hydroxy groups in said polyepoxide to isocyanate groups of from 2:1 to 30:1, and said diglycidyl ether has a number average molecular weight in the range of 1,200 to 2,000.

8. A method as recited in claim 1 in which said dispersion includes from 10-15% of water miscible organic solvent, based on resin solids.

9. A method as recited in claim 1 in which an aminoplast resin is present in the water of said aqueous coating composition to aid the cure.